# EUROPEAN PATENT APPLICATION

(11) **EP 3 865 793 A1**
(43) Date of publication of application: **18.08.2021**
(21) Application number: 20800543.9
(22) Date of filing: 05.08.2020
(51) Int. Cl.: F25D 11/00, F25D 23/00, B65D 88/74

(54) **ELECTRICAL FIELD GENERATING CONTAINER**

(30) Priority: 27.12.2019 JP 2019239090; 27.12.2019 JP 2019239089
(71) Applicant: Nittsu Shoji Co., Ltd., Minato-ku Tokyo 1058338 (JP)
(72) Inventor: MITSUMA, Shuhei, Tokyo 1058338 (JP)
(74) Representative: Schmid, Wolfgang
(86) International application number: PCT/JP2020/029977
(87) International publication number: WO 2021/131134

(57) **Abstract**

The present invention effectively forms an electric field directed into the interior of an accommodation chamber of an electric field-generating container. An electric field-generating container 1 includes a container casing 2 and electrode members 5. The container casing 2 includes an accommodation chamber 4 that accommodates a stored product. The electrode members 5 form an electric field in the accommodation chamber 4. The container casing 2 includes a ceiling interior finishing panel 2a3 made of electrical insulating resin. The ceiling interior finishing panel 2a3 is provided as an indoor surface of the accommodation chamber 4. The electrode members 5 are held on the ceiling interior finishing panel 2a3.

## Description

### Technical Field

The present invention relates to an electric field-generating container.

### Background Art

An electric field-generating container such as a reefer container known in the art enables generation of an electric field in an accommodation chamber of the container (see, for example, PTL 1). The electric field formed in the accommodation chamber of the electric field-generating container helps maintain freshness of perishables, which may be herein referred to as stored products.

### Citation List

### Patent Literature

PTL 1: Japanese Patent No. 6499366

### Summary of Invention

### Technical Problem

Such an electric field-generating container includes an electrode plate on a ceiling surface of a container casing to form an electric field in an accommodation chamber accommodating stored products. The accommodation chamber typically includes, as a ceiling surface, a ceiling panel made of electrically conductive metal such as stainless steel. To form an electric field directed inward toward stored products in the accommodation chamber, the container preferably minimizes formation of an electric field directed outward toward the metallic ceiling panel that is at zero potential.

### Solution to Problem

According to an aspect of the present invention, an electric field-generating container includes a container casing, a resin panel, and an electrode plate. The container casing includes an accommodation chamber that accommodates a stored product. The resin panel has electrical insulation properties and is provided as the whole or part of an indoor surface of the accommodation chamber. The electrode plate is adjacent to the resin panel and is capable of forming an electric field in the accommodation chamber.

### Brief Description of Drawings

[Fig. 1] Fig. 1 is a sectional view of an electric field-generating container according to an embodiment, illustrating the electric field-generating container taken along line I-I in Fig. 2.
[Fig. 2] Fig. 2 is a sectional view of the electric field-generating container taken along line II-II in Fig. 1.
[Fig. 3] Fig. 3 is a sectional view of the electric field-generating container taken along line III-III in Fig. 1.
[Fig. 4] Fig. 4 is a partial enlarged view of Part IV in Fig. 3.
[Fig. 5] Fig. 5 includes sectional views of electrode members in different embodiments.
[Fig. 6] Fig. 6 is an explanatory schematic drawing of a reefer apparatus incorporated in the electric field-generating container in Fig. 1.
[Fig. 7] Fig. 7 is an enlarged view of an electric field generation controller in Fig. 6, illustrating its installation state.
[Fig. 8] Fig. 8 is an explanatory schematic drawing of the internal structure of the electric field generation controller in Fig. 7, with an upper hatch and a lower hatch being omitted.
[Fig. 9] Fig. 9 is a sectional view corresponding to Fig. 2, illustrating a ceiling interior finishing panel of an electric field-generating container according to a second embodiment.
[Fig. 10] Fig. 10 is a sectional view corresponding to Fig. 2, illustrating a ceiling interior finishing panel of an electric field-generating container according to a third embodiment.
[Fig. 11] Fig. 11 is a sectional view corresponding to Fig. 2, illustrating a ceiling interior finishing panel of an electric field-generating container according to a fourth embodiment
[Fig. 12] Fig. 12 is a partial enlarged view of Part XII in Fig. 11.
[Fig. 13] Fig. 13 is a sectional view corresponding to Fig. 2, illustrating a ceiling interior finishing panel of an electric field-generating container according to a fifth embodiment.
[Fig. 14] Fig. 14 is a sectional view taken along line XIV-XIV in Fig. 13 and rotated 90° clockwise.
[Fig. 15] Fig. 15A is a view corresponding to Fig. 2 and is a schematic explanatory drawing of an electric field-generating container according to a sixth embodiment. Fig. 15B is a view corresponding to Fig. 2 and is a schematic explanatory drawing of an electric field-generating container according to a seventh embodiment.

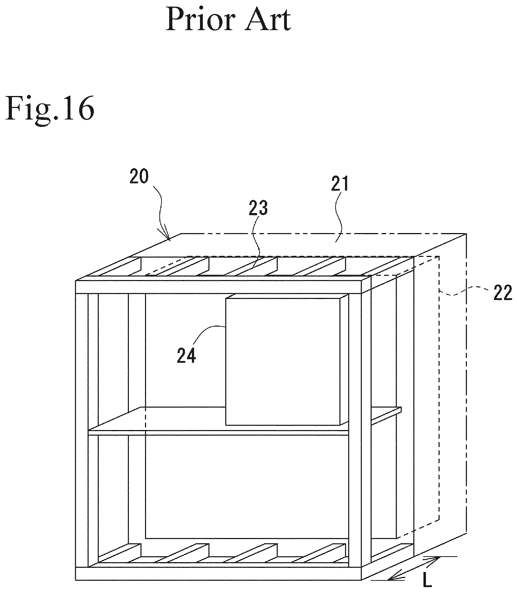

[Fig. 16] Fig. 16 is an explanatory drawing of an electric field generation controller, illustrating its installation state in an electric field-generating container according to a technique known in the art.

### Description of Embodiments

Hereinafter, exemplary embodiments of the present invention will be described. It should be noted that embodiments described below do not unduly limit the present invention hereafter claimed, and that not all of the configurations in the following embodiments are required as means for solving the problems under the present invention.

With a door 2e at the front of an electric field-generating container 1, the right-and-left direction (i.e., the width direction), the up-and-down direction (i.e., the height direction), the fore-and-aft direction (i.e., the longitudinal direction) of the electric field-generating container 1 are hereinafter referred to as X, Z, and Y directions, respectively. The wording "first..." and "second ..." used herein or in appended claims are intended to make different constituent components distinguishable from one another and are not intended to represent a specific order or relative superiority. Each of the drawings schematically illustrates a principal part of the device configuration of the electric field-generating container 1 for the purpose of facilitating the understanding.

In the following embodiments, the electric field-generating container 1 is described as an example of a container whose exterior dimensions, interior dimensions, and door opening are equivalent to those of 40-ft containers (40-ft high-cube reefer containers). Specifically, the exterior dimensions of the electric field-generating container 1 are as follows: the electric field-generating container 1 has a length of 12,192 mm (in the Y direction); a width of 2,438 mm (in the X direction); and a height of 2,896 mm (in the Z direction). In the accompanying drawings, the electric field-generating container 1 is not drawn to scale. The electric field-generating container 1 according to the present invention may also be implemented as a 20-ft container, a 40-ft non-high cube container, or a reefer container of any size.

The electric field-generating container 1 described in the following embodiments may be used for transportation (by sea, air, land, etc.) or may be permanently installed. The stored products in the electric field-generating container 1 may include: fresh food such as fishery products, produce (vegetables and fruits), and meat; flowers and ornamental plants; and other perishables, but are not limited thereto.

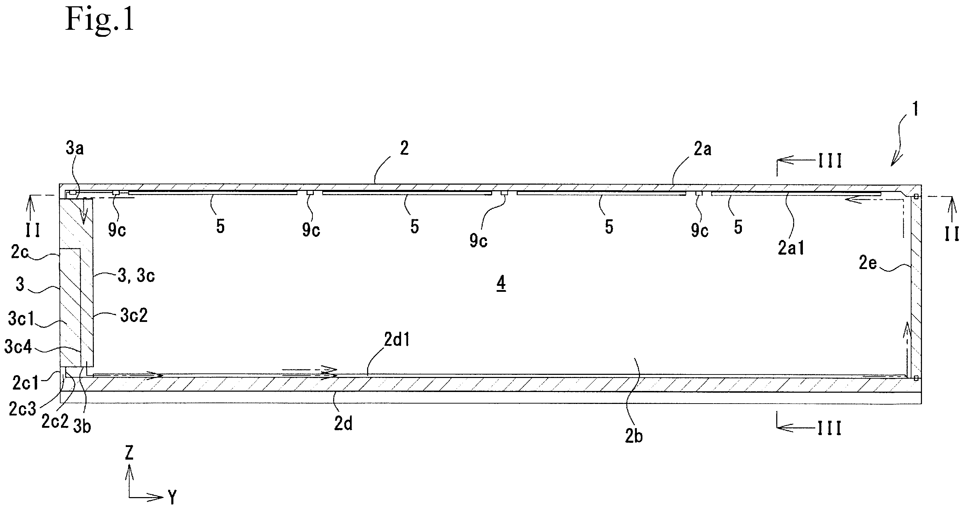

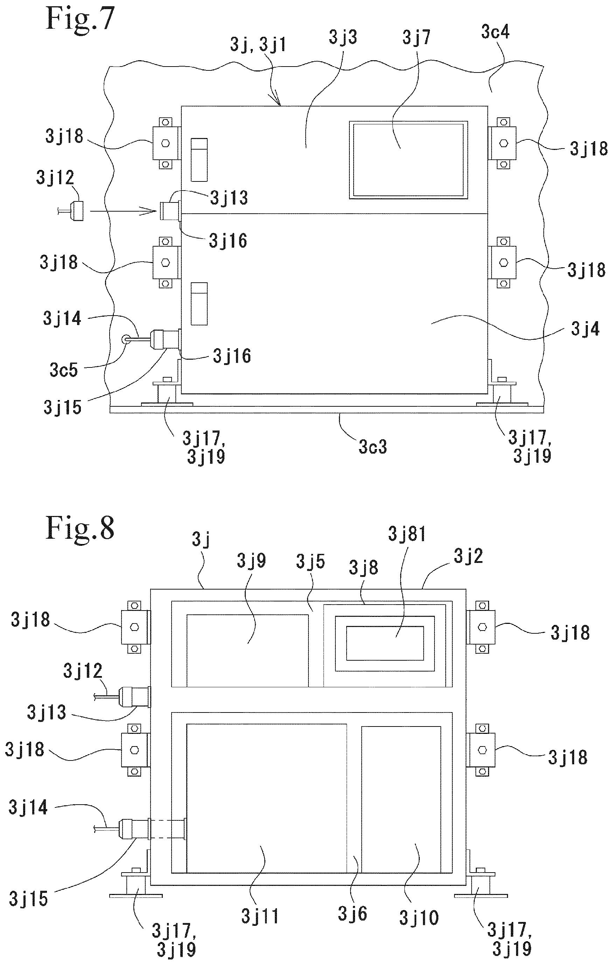

### First Embodiment (Figs. 1 to 8)

### Electric Field-Generating Container 1

The electric field-generating container 1 includes a container casing 2 and a reefer apparatus 3. The container casing 2 is box-shaped and includes an accommodation chamber 4.

### Container Casing 2

The container casing 2 includes a ceiling portion 2a, a pair of side wall portions 2b, a front wall portion 2c, a floor portion 2d, and a door 2e. The ceiling portion 2a, the pair of side wall portions 2b, the front wall portion 2c, the floor portion 2d, and the door 2e each include an exterior finishing panel, an interior finishing panel, and a heat insulator disposed between the exterior and interior finishing panels. This wall structure eliminates the susceptibility to the outside air temperature and enables the reefer apparatus 3 to maintain a predetermined temperature of the accommodation chamber 4. The exterior finishing panels and the interior finishing panels except for a ceiling interior finishing panel 2a3, which will be described later, are made of metallic materials.

The accommodation chamber 4 is formed by the interior finishing panels of the components such as the ceiling portion 2a, the pair of side wall portions 2b, the front wall portion 2c, the floor portion 2d, and the door 2e, and front surfaces of these interior finishing panels constitute an indoor surface of the accommodation chamber 4. The accommodation chamber 4 is formed as a space defined by the interior finishing panels of the components such as the ceiling portion 2a, the pair of side wall portions 2b, the front wall portion 2c, the floor portion 2d, and the door 2e. The front wall portion 2c includes a front wall exterior finishing panel 2c1, a front wall interior finishing panel 2c2, a front wall heat insulator 2c3, and the reefer apparatus 3, which is securely installed in the front wall portion 2c.

The reefer apparatus 3 serves as a temperature-adjusting apparatus and a cooling apparatus. As illustrated in Fig. 1, the reefer apparatus 3 includes a casing 3c, which includes a suction portion 3a and an air outlet 3b. Air (cold air) in the accommodation chamber 4 is sucked in through the suction portion 3a, and cold air is blown into the accommodation chamber 4 through the air outlet 3b. The cold air blown into the accommodation chamber 4 through the air outlet 3b is guided to the door 2e through floor surface ventilation paths 2d1, each of which is groove-shaped and formed between T rails constituting the floor portion 2d. The cold air flows upward along the door 2e and reaches a ceiling surface 2a1 of the ceiling portion 2a. The cold air then flows along the ceiling surface 2a1 toward the front and is sucked into the suction portion 3a of the reefer apparatus 3. That is, cold air circulates around the accommodation chamber 4 as denoted by an arrow with a dash-dot-dot line in Fig. 1.

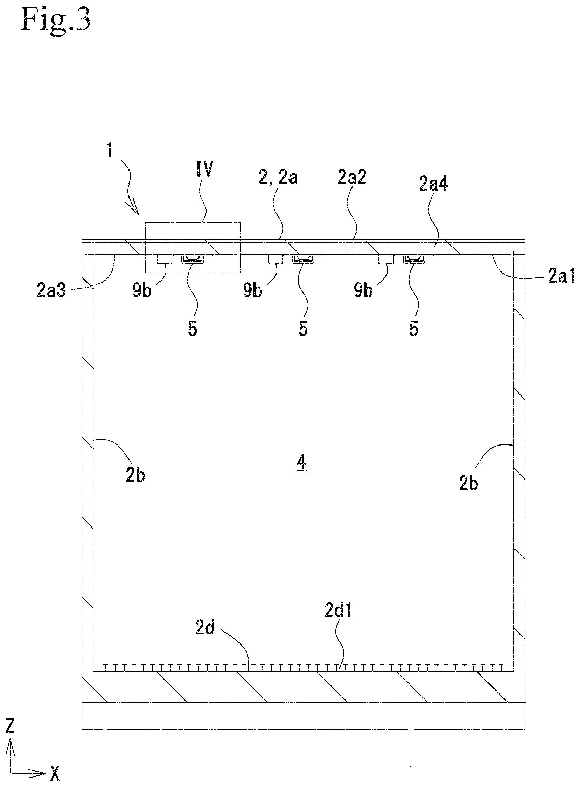

The ceiling portion 2a of the container casing 2 includes a ceiling exterior finishing panel 2a2, the ceiling interior finishing panel 2a3, and a ceiling heat insulator 2a4 (see Fig. 3). The ceiling exterior finishing panel 2a2 may be made of a metallic material such as an iron plate. The side wall portions 2b, the front wall portion 2c, the floor portion 2d, and the door 2e may each include an exterior finishing panel made of a metallic material such as an iron plate and an interior finishing panel made of a metallic material such as stainless steel. The ceiling exterior finishing panel 2a2 is provided with exterior finishing panel-reinforcing members (not illustrated) that are fixed, by spot welding, to a surface adjoining the ceiling heat insulator 2a4. The exterior finishing panel-reinforcing members are made of metal. The exterior finishing panel-reinforcing members extend in the width direction of the ceiling exterior finishing panel 2a2 (i.e., in the X direction) and are arranged in parallel in the longitudinal direction of the ceiling exterior finishing panel 2a2 (i.e., in the Y direction). The exterior finishing panel-reinforcing members are embedded in the ceiling heat insulator 2a4 and are discretely located away from the ceiling interior finishing panel 2a3. As with reinforcing members 2a5, which will be described later, the exterior finishing panel-reinforcing members may be made of a resinous material.

The ceiling interior finishing panel 2a3 is a resin panel made entirely of electrical insulating resin. That is, the ceiling interior finishing panel 2a3 is one form of a resin panel (i.e., an interior finishing panel made of resin) of the present invention. The electrical insulating resin to be used may be a fiber reinforced plastic (FRP) material; that is, the ceiling interior finishing panel 2a3 is a molded panel made of the RFP material. The molded panel in the present embodiment is a single panel. Fiber reinforced plastics are highly insulative, have low thermal expansion coefficients, may be formed into a large panel-like object, and are thus preferred as the ceiling interior finishing panel 2a3. Fiber reinforced plastics allow an electric field to pass therethrough and are thus also preferred as the reinforcing members 2a5, which do not affect the forming of an electric field by electrode plates 7 accordingly. An electric insulating filler such as glass fiber is added to the FRP resin.

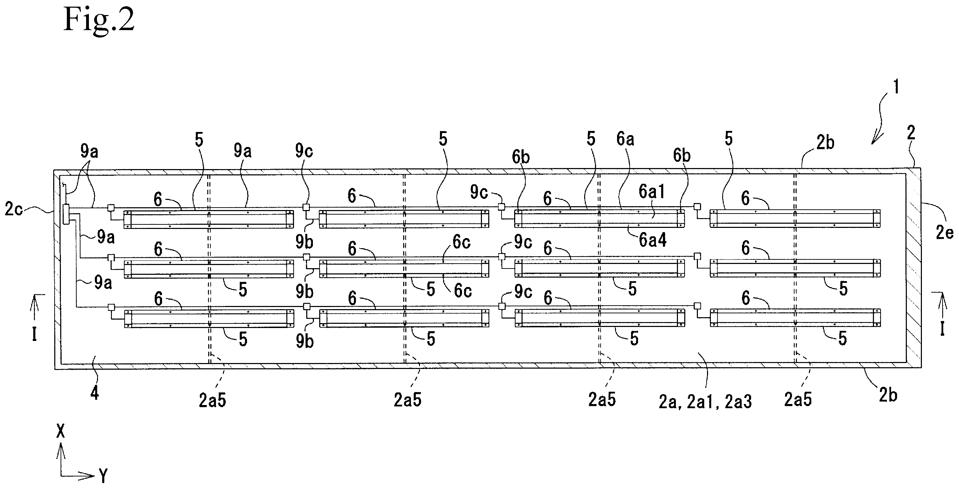

As illustrated in Fig. 2, the reinforcing members 2a5 are fastened to an inner surface (i.e., a facing surface) being one of the surfaces of the ceiling interior finishing panel 2a3 and facing the ceiling exterior finishing panel 2a2. The reinforcing members 2a5 increase the stiffness of the ceiling interior finishing panel 2a3 made of the FRP material. To that end, the reinforcing members 2a5 extend in the width direction of the ceiling interior finishing panel 2a3 (i.e., in the X direction). The reinforcing members 2a5 may also be provided on an inner surface being one of the surfaces of the ceiling exterior finishing panel 2a2 and facing the ceiling interior finishing panel 2a3, as mentioned above. The reinforcing members 2a5 each having a height corresponding to the spacing between the ceiling exterior finishing panel 2a2 and the ceiling interior finishing panel 2a3 may be provided as spacers fastened therebetween. The ceiling portion 2a may thus be entirely reinforced to a greater extent. The reinforcing members 2a5 are molded articles made of an FRP material, the reason for which is as described above with regard to the ceiling interior finishing panel 2a3. The reinforcing members 2a5 may each have a shape of, for example, a cylinder and more preferably have a shape of a rectangular prism.

The ceiling surface 2a1 of the accommodation chamber 4 is provided with electrode members 5. Referring to Fig. 2, the electric field-generating container 1 includes a plurality of electrode members 5, or more specifically, 12 electrode members 5. Each electrode member 5 is rod-like throughout its entire length. The electrode members 5 are located away from each other and are arranged in parallel in the width direction of the container casing 2 (i.e., in the X direction or in the crossing direction), with the longitudinal direction of each electrode member 5 coinciding with the longitudinal direction of the container casing 2 (i.e., the Y direction). This arrangement enables a shortening of the individual electrode members 5 (i.e., electrode-housing members 6 and the electrode plates 7), and ease of production and handleability may be achieved accordingly.

### Electrode Members 5

The electrode members 5 include their respective electrode-housing members 6 and their respective electrode plates 7. The electrode plates 7 generate an electric field through the application of high voltage.

Each of the electrode-housing members 6 is one form of a holding member of the present invention. The electrode-housing members 6 are made of electrical insulating resin. Specifically, the electrode-housing members 6 in the present embodiment are made of rigid polyvinyl chloride (PVC). Rigid PVC has flame retardancy, heat-resisting properties, and a brittle temperature that render it suited for use as containers. In view of the fact that the electric field-generating container 1 has the function of generating an electric field, rigid PVC is particularly suited for formation of an electric field in the accommodation chamber 4 because of its excellent electrical insulation properties and its high dielectric constant, which promote transmission of an electric field generated by the electrode plates 7.

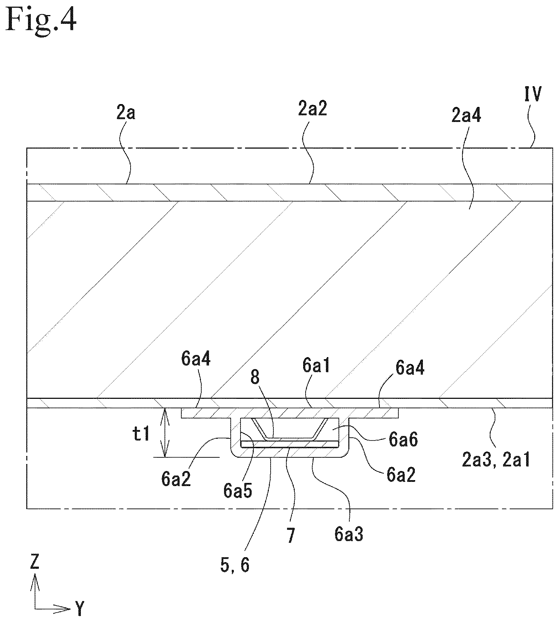

Each electrode-housing member 6 is a flat tubular member and includes a main body part 6a and end caps 6b. The main body part 6a has a tubular shape and accommodates the electrode plate 7. As illustrated in Fig. 4, the main body part 6a includes a top face portion 6a1 (i.e., an attachment portion), a pair of side face portions 6a2, and a bottom face portion 6a3. Flange portions 6a4 are provided on the respective side faces extending in the longitudinal direction of the top face portion 6a1 and protrude from the side face portions 6a2. Each flange portion 6a4 has through-holes (not illustrated) aligned in the longitudinal direction of the flange portion 6a4, and fasteners 6c (e.g., screws or rivets) are inserted into the respective through-holes for fastening to the ceiling surface 2a1. Each end cap 6b seals the corresponding end of the main body part 6a and has through-holes (not illustrated) into which the fasteners 6c are inserted for fastening to the ceiling surface 2a1.

Each electrode-housing member 6 is shorter than the width of the ceiling surface 2a1 of the container casing 2 in the X direction. Each electrode plate 7 and the corresponding main body part 6a are of the same length. The electrode plate 7 is thus capable of generating an electric field substantially along the entire length of the electrode-housing member 6.

Each electrode-housing member 6 is a single tube having a wall with no holes throughout its entire length. Each electrode plate 7 is covered with the corresponding electrode-housing member 6 along its entire length and is not exposed to view in the accommodation chamber 4. In this way, stored products (e.g., freight) in the accommodation chamber 4 are kept from direct contact with the electrode plates 7 for safety. The electrode plates 7 are also kept from dust and are thus maintained in a safe state when being energized with high voltage. The electrode plates 7 are safely protected from getting wet during cleanup of the interior of the accommodation chamber 4. The avoidance of moisture protects the electrode plates 7 from, for example, rust, which would otherwise cause corrosion of the electrode plates 7 and would eventually compromise electrical continuity of the electrode plates 7 and formation of an electric field. The accommodation chamber 4 may be easily cleaned up without extra caution taken as to the electrode plates 7.

End portions of each electrode-housing member 6 are maintained liquid-tight by the end caps 6b. Specifically, the main body part 6a and each of the end caps 6b are disposed with a waterproofing part (not illustrated) therebetween. The electrode plate 7 is thus sealed liquid-tight in the electrode-housing member 6. This eliminates the possibility that the stored products will come into contact with the electrode plates 7 through the ends of the electrode-housing members 6. The electrode-housing members 6 will be kept from dust and will also be prevented from getting wet during cleanup.

As illustrated in Fig. 4, each electrode-housing member 6 has an electrode plate housing 6a5, which accommodates the corresponding electrode plate 7. The electrode plate housing 6a5 and the electrode plate 7 are of the same length and width. The electrode plate housing 6a5 is formed as a space whose height is greater than the thickness of the electrode plate 7. The electrode plate housing 6a5 in the present embodiment includes an insulation cavity 6a6, which is provided on the electrode plate 7.

The insulation cavity 6a6 is technically significant as an insulation cavity that electrically isolates the electrode plate 7 from the ceiling exterior finishing panel 2a2 located above the electrode plate 7 and made of metal. The insulation cavity 6a6 in the electrode-housing member 6 provides a high-insulation air space within the electrode-housing member 6. The air space (i.e., the insulation cavity 6a6) helps minimize formation of an electric field extending from the electrode plate 7 and directed toward the ceiling exterior finishing panel 2a2 that is made of metal and is at ground potential (i.e., at zero potential). This facilitates the formation of an electric field extending from the electrode plates 7 into the accommodation chamber 4. The electric field in the accommodation chamber 4 may thus be formed in an efficient and effective manner.

The electrode plates 7 are conductive plates such as aluminum plates. The electrode plates 7 each have a shape of a flat plate, or more specifically, a shape of a strip. Each electrode plate 7 and the corresponding main body part 6a are substantially of the same length. The electrode plate 7 is thus capable of forming an electric field in the longitudinal direction of the main body part 6a. The electrode plates 7 are arranged in a matrix extending from the door 2e side and ending short of the front wall portion 2c. This arrangement enables the electrode plates 7 to form an electric field throughout the accommodation chamber 4. In the present embodiment, 12 electrode plates 7 (i.e., 12 electrode members 5) are arranged. In some modifications of the present embodiment, the number of electrode plates 7 (i.e., the number of electrode members 5) may be not more than 11 or not less than 13. Each electrode plate 7 is a single plate, and the number of components may thus be less than would be the case where each electrode plate 7 is composed of plate parts. Alternatively, each electrode plate 7 may be composed of conductive plates connected to each other in a manner so as to enable conduction of electricity.

Each electrode plate 7 is provided with a press member 8, which is disposed thereon (see Fig. 4). The press member 8 is a leaf spring. The press member 8 is disposed in the electrode plate housing 6a5 and exerts bias force on the electrode plate 7 in a manner so as to move the electrode plate 7 away from the ceiling surface 2a1. The electrode plate 7 is kept pressed against the bottom face portion 6a3, which is an inner face of the electrode plate housing 6a5. The electrode plate 7 may be kept immovable in the electrode plate housing 6a5 having the insulation cavity 6a6. The press members 8 are made of electrical insulating resin. As in the case of the electrode-housing members 6 mentioned above, rigid PVC may be used for molding of the press members 8 to take advantage of, for example, its excellent electrical insulation properties and its high dielectric constant, which promote transmission of an electric field generated by the electrode plates 7.

Each of the electrode members 5 described so far is rod-like throughout its entire length. The fasteners 6c for fastening to the ceiling portion 2a may be inserted into the through-holes of the main body part 6a and into the through-holes of the end caps 6b to fix the electrode member 5 to ceiling surface 2a1. This facilitates the fixation of the electrode members 5.

The electrode members 5 are thin in profile and achieve a reduction in the degree of prominence on the ceiling surface 2a1 accordingly. The main body part 6a of the electrode-housing member 6 has, for example, a height of 22 mm and a width of 135 mm; that is, t1 in Fig. 4 is 22 mm, and the width of the top face portion 6a1 including the flange portions 6a4 (i.e., the width of the mounting surface of the electrode-housing member 6 on the ceiling surface 2a1) is 135 mm. Each end cap 6b has, for example, a height of 25 mm and a width of 135 mm; that is, the dimension corresponding to the height of the main body part 6a is 25 mm, and each end cap 6b and the main body part 6a are of the same width. Each electrode plate 7 has, for example, a width of 80 mm and a thickness of 3 mm. Each electrode member 5 as a whole may have a low-profile, flat shape accordingly. With the electrode members 5 having such a geometry, the interior height of the accommodation chamber 4 may be reduced correspondingly; that is, the electrode members 5 may be installed with a minimum reduction in carrying capacity (internal capacity). The aforementioned values are merely example values. Needless to say, the dimensions may be changed. The prominence formed by the electrode member 5 on ceiling surface 2a1 is preferably not more than 30 mm, more preferably not more than 25 mm, still more preferably not more than 20 mm, particularly preferably not more than 15 mm, and more particularly preferably not more than 10 mm.

The individual electrode plates 7 are connected to an electric field generation controller 3j via conduction paths 9 (i.e., wiring) and a high-tension wire 3j14. The conduction paths 9 (i.e., wiring) each include main wires 9a, branch wires 9b, and branch connectors 9c. The conduction paths 9 are omitted from Fig. 4. The electrode plates 7 are connected in parallel to the reefer apparatus 3. If conduction in any one of the electrode plates 7 (i.e., in any one of the electrode members 5) ceases due to, for example, breakage, this arrangement would ensure continued conduction in the other electrode plates 7. Furthermore, there is no problem with the branch connectors 9c getting wet because the branch connector 9c are waterproof connectors. Aqueous cleaning of the accommodation chamber 4 may thus be performed.

### Reefer Apparatus 3

The reefer apparatus 3 according to an embodiment is a unit apparatus designed for installation on the container casing 2. The reefer apparatus 3 is bolted to the front wall portion 2c of the container casing 2. The reefer apparatus 3 is driven when being connected to a power cable of a power supply system (i.e., an external power source) such as a power supply box or a container stand installed in a container terminal or in a container ship. Upon application of power by the reefer apparatus 3, the electric field generation controller 3j, which will be described later, goes into action to energize the electrode plates 7 with high voltage. The reefer apparatus 3 includes the casing 3c. The casing 3c includes a frame body 3c1 and a reefer cabinet 3c2. The frame body 3c1 includes an upper section, a middle section, and a lower section. The middle section and the lower section are located on the front side of the reefer cabinet 3c2.

The upper section has two hatches 3d. The hatches 3d are openable for access to the inside of the reefer cabinet 3c2. The middle section is provided with a partition shelf 3e, which is a partition between the middle section and the lower section. Devices placed on the partition shelf 3e includes a condenser 3f and an operation device 3g, which is operable for adjustment of the temperature of the accommodation chamber 4. The operation device 3g includes a display screen 3g1 and an operation element 3g2.

The lower section accommodates a compressor compartment 3h, an inverter device 3i, and the electric field generation controller 3j. The electric field generation controller 3j and the inverter device 3i face a protective panel 3k, which is located in front of them and made of metal. The top of the protective panel 3k is located below an upper hatch 3j3, which is part of the electric field generation controller 3j and will be described later. This is advantageous in that the opening of the upper hatch 3j3 alone, without the protective panel 3k becoming a hindrance thereto, makes the operation device 3g available for user manipulation.

The protective panel 3k and the inverter device 3i are disposed with a clearance therebetween. The clearance provides a power cable-housing portion for receiving a power cable 3m (see Fig. 3). The power cable 3m is composed of a power plug 3m1 and a cable 3m2. The cable 3m2 is connected to the reefer apparatus 3. Connecting the power cable 3m to a power cable of a power supply system such as a power supply box or a container stand installed in a container terminal or in a container ship enables supply of external electric power to the reefer apparatus 3.

In terms of functionality, temperature-adjusting devices such as the condenser 3f, the operation device 3g, the compressor compartment 3h, and the inverter device 3i constitute a cooling unit (cooling apparatus) 3A, and the electric field generation controller 3j having a function associated with an electric field is an electric field generation control unit 3B. The reefer apparatus 3 is an electric field temperature control unit that is a combination of the cooling unit 3A and the electric field generation control unit 3B.

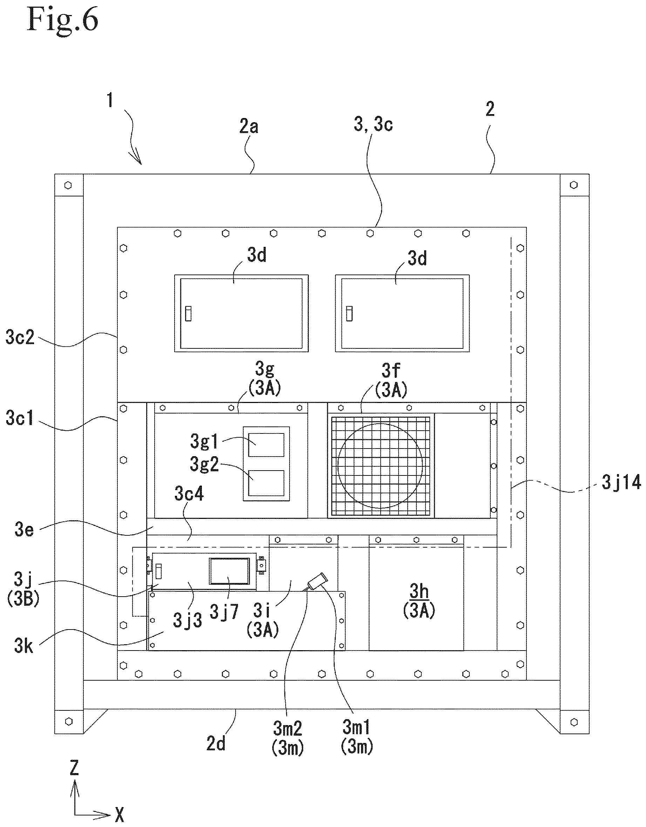

### Electric Field Generation Controller 3j (Figs. 6, 7, and 8)

The electric field generation controller 3j is incorporated in the reefer apparatus 3. The electric field generation controller 3j includes a cabinet 3j1. The cabinet 3j1 has the upper hatch 3j3 (a first hatch) and a lower hatch 3j4 (a second hatch), which are hatches with which a front opening of a main body 3j2 is closed.

The upper hatch 3j3 is provided for opening and closing of an upper housing portion 3j5 (i.e., a first housing portion) of the main body 3j2. When being closed, the hatch 3j3 keeps the upper housing portion 3j5 sealed liquid-tight. The upper hatch 3j3 has a window 3j7, through which a display screen 3j81 is visible from outside the upper hatch 3j3.

The lower hatch 3j4 is provided for opening and closing of a lower housing portion 3j6 (i.e., a second housing portion) of the main body 3j2. When being closed, the hatch 3j4 keeps the lower housing portion 3j6 sealed liquid-tight. Opening the lower hatch 3j4 involves the removal of the protective panel 3k facing the lower hatch 3j4. The extra effort required to open the lower hatch 3j4 is conducive to the protection of a high-voltage power supply being an electric field emission source installed in the lower housing portion 3j6 and to the maintenance of safety.

The upper housing portion 3j5 accommodates an operation display device 3j8, a transformer (not illustrated), and a first mechanical part 3j9. The display screen 3j81 is provided on the operation display device 3j8. The first mechanical part 3j9 includes mainly a PLC, a power supply device, and a breaker device. The operation display device 3j8 is operable for controlling various operating statuses of the electric field generation controller 3j. As mentioned above, the protective panel 3k will not become a hindrance to the opening of the upper hatch 3j3. This provides ease of use; that is, the opening of the upper hatch 3j3 alone makes the operation display device 3j8 available for user manipulation.

The lower housing portion 3j6 accommodates a second mechanical part 3j10 and a third mechanical part 3j11. The second mechanical part 3j10 includes mainly relays, a fan motor, and a heater. The third mechanical part 3j11 includes mainly various types of terminal blocks and the high-voltage power supply.

The electric field generation controller 3j is powered and driven by the reefer apparatus 3. For reception of power, the cabinet 3j1 of the electric field generation controller 3j is provided with a power supply connection portion 3j13, which is on a side face of the cabinet 3j1. The power supply connection portion 3j13 is provided for connection to one end of a power line 3j12, the other end of which is connected to the reefer apparatus 3.

Power transmitted through the power line 3j12 is fed into the first mechanical part 3j9, where the power supply device drives the PLC accordingly. The voltage of power supply transmitted through the power line 3j12 is increased by the transformer, and the resulting high voltage power is fed into the high-voltage power supply included in the third mechanical part 3j11. The high-voltage power supply applies the high voltage to the electrode plates 7 through the conduction paths 9. For application of high voltage, the cabinet 3j1 of the electric field generation controller 3j is provided with a high-tension wire connection portion 3j15, which is on the side face of the cabinet 3j1. The high-tension wire connection portion 3j15 is provided for connection to one end of the high-tension wire 3j14, the other end of which is connected to the conduction paths 9.

The high-tension wire 3j14 is led into the reefer cabinet 3c2 through an insertion hole 3c5 in a front plate 3c4. As denoted by a dash-dot-dot line in Fig. 6, the high-tension wire 3j14 is routed through the reefer cabinet 3c2 and is connected to the conduction paths 9 through a connector (not illustrated) in a box-shaped, enclosed space that is defined by the reefer cabinet 3c2 and located behind the front plate 3c4 (i.e., located close to the accommodation chamber 4).

The conduction paths 9 extend out from the upper part of the reefer cabinet 3c2 and are led into the accommodation chamber 4, where the conduction paths 9 are connected to the electrode plates 7.

These various types of devices required to transform the power of the reefer apparatus 3 into a high voltage and to apply the resulting high voltage to the electrode plates 7 through the conduction paths 9 are all packaged in a single cabinet, namely, the cabinet 3j1 of the electric field generation controller 3j. The compact design of the electric field generation controller 3j enables it to be installed easily in the frame body 3c1 of the reefer apparatus 3.

In addition to the power supply connection portion 3j13 and the high-tension wire connection portion 3j15, a signal line connection portion (not illustrated) for connection to a sensor that senses the opening and closing of the door 2e is provided on the side face of the cabinet 3j1. Control is exercised in such a manner that the application of high voltage to the electrode plates 7 is stopped when the door 2e is closed.

The cabinet 3j1 is a dustproof, waterproof cabinet having dust and water resistance with IP 54 rating. The upper hatch 3j3, the lower hatch 3j4, and the main body 3j2 adjoin each other with a dust- and waterproofing sealing portion (not illustrated) therebetween. The power supply connection portion 3j13, the high-tension wire connection portion 3j15, and the signal line connection portion are each placed on a dust- and waterproofing grommet 3j16. The cabinet 3j1 is protected against intrusion of dust and water droplets accordingly. This enables the electric field generation controller 3j to offer added safety.

The cabinet 3j1 is provided with first vibration-isolating support feet 3j17 and second vibration-isolating support feet 3j18, each of which is attached to a left-hand or right-hand side face of the cabinet 3j1. The vibration-isolating support feet have the same structure. The first vibration-isolating support feet 3j17 are arranged in the depth direction of the cabinet 3j1 and are fastened to a lower frame plate 3c3 of the frame body 3c1 of the reefer apparatus 3. The second vibration-isolating support feet 3j18 are arranged in the height direction of the cabinet 3j1 and are fastened to the front plate 3c4 of the reefer cabinet 3c2 of the reefer apparatus 3. The electric field generation controller 3j is disposed with a clearance from the lower frame plate 3c3 and with a clearance from the front plate 3c4.

The first vibration-isolating support feet 3j17 and the second vibration-isolating support feet 3j18 are each provided with a rubber foot 3j19, which is a rubbery elastic body. The rubber feet 3j19 are elastically deformable to allow displacement of the electric field generation controller 3j from the frame body 3c1 being part of the reefer apparatus 3 and securely installed in the container casing 2. The container casing 2 may undergo vibration or impact when the electric field-generating container 1 is carried by a crane. Similarly, the container casing 2 may undergo vibration or impact when the electric field-generating container 1 is on a container ship underway or stays stationary in, for example, a container yard. Under these circumstances, the electric field generation controller 3j is protected in such a manner that the rubber feet 3j19, which are elastically deformable to allow displacement of the electric field generation controller 3j from the frame body 3c1 of the reefer apparatus 3, dampen vibration or impact on the constituent mechanical components of the electric field generation controller 3j.

### Advantageous Effects of Embodiment

The following describes some of the advantageous effects that may be produced by the electric field-generating container 1.

The electric field-generating container 1 includes the ceiling interior finishing panel 2a3 (i.e., the resin panel) that has electrical insulation properties and is provided as the ceiling surface 2a1 of the accommodation chamber 4 (i.e., as the indoor surface of the accommodation chamber 4). If the ceiling interior finishing panel 2a3 is a metallic panel, an electric field extending from the electrode plates 7 and directed toward the metallic plate that is at zero potential is likely to be formed, with a weakening of an electric field extending into the accommodation chamber 4. As a workaround to the weakening of the electric field, the electrode plates 7 may be disposed as far away from the metallic plate (i.e., from the ceiling interior finishing panel) as possible so as to minimize the formation of an electric field directed to the metallic panel. However, this may cause an increase in the degree of prominence of the electrode plates 7 (i.e., the electrode members 5) on the metallic panel (i.e., on the ceiling surface) in the interior of the accommodation chamber 4, whose carrying capacity would be reduced accordingly. The electric field-generating container 1 includes the ceiling interior finishing panel 2a3 that is made of electrical insulating resin and is provided as the ceiling surface 2a1 of the accommodation chamber 4. This eliminates the need to dispose the electrode plates 7 (i.e., the electrode members 5) deep into the interior, away from the ceiling interior finishing panel 2a3. The electrode members 5 in the present embodiment may thus be fixed to the ceiling interior finishing panel 2a3. In this way, the electric field-generating container 1 achieves a reduction in the degree of prominence of the electrode members 5 in the accommodation chamber 4; that is, the electrode member 5 may be fixed to the ceiling portion 2a with a minimum reduction in the carrying capacity (internal capacity) of the accommodation chamber 4.

The ceiling interior finishing panel 2a3 that is a resin panel is provided as the whole of the ceiling surface 2a1 of the accommodation chamber 4. This means that every part of the ceiling surface 2a1 is not at zero potential, and an electric field extending from the electrode plates 7 into the accommodation chamber 4 may be formed all over the ceiling surface 2a1. The electrode members 5 (i.e., the electrode plates 7) may be disposed in any location on the ceiling surface 2a1.

The electric field-generating container 1 includes the electrode-housing members 6 (i.e., the holding members) having electrical insulation properties and each including the electrode plate housing 6a5 that has a flat shape to accommodate the corresponding electrode plate 7. The electrode-housing members 6 may thus be thin in profile, and a reduction in the degree of prominence of the electrode-housing members 6 on the ceiling surface 2a1 in the accommodation chamber 4 may be achieved accordingly.

The electrode-housing members 6 (i.e., the holding members) of the electric field-generating container 1 are fixed directly to the ceiling interior finishing panel 2a3 (i.e., to the resin plate). This enables a reduction in the degree of prominence of the electrode-housing members 6 on the ceiling surface 2a1 in the accommodation chamber 4.

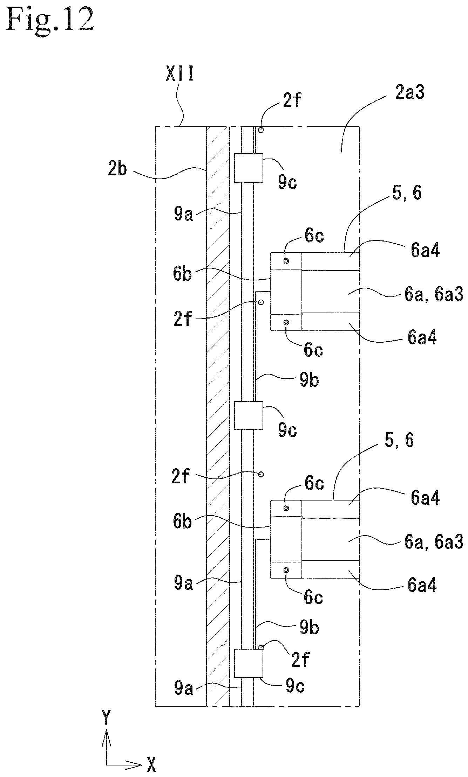

Fig. 12 is a perspective view of part of an electric field-generating container according to a technique known in the art. Referring to Fig. 12, the electric field-generating container according to the technique known in the art includes a container casing 21, in which a reefer apparatus 22 is placed. The container casing 21 is provided with a support frame 23, which extends outward from an end portion of the container casing 21. An electric field generation controller 24 is placed on the support frame 23. The support frame 23 extending outward from the container casing 21 has a length L, which is the amount by which the overall length of the container casing 21 needs to be reduced. As a result, the carrying capacity of the container casing 21 of the electric field-generating container known in the art is reduced. As a workaround to this problem, the electric field-generating container 1 includes the reefer apparatus 3 in which the electric field generation controller 3j is incorporated. More specifically, the electric field generation controller 3j is accommodated in the casing 3c of the reefer apparatus 3. This eliminates the need for the support frame 23 extending outward from the container casing 21 of the electric field-generating container according to the technique known in the art and enables the installation of electric field generation controller 3j without involving a reduction in the carrying capacity of the accommodation chamber 4.

The electric field generation controller 3j includes the cabinet 3j1, the power supply connection portion 3j13, and the high-tension wire connection portion 3j15. The power supply connection portion 3j13 is provided on the cabinet 3j1 and is connectable to the power line 3j12 through which the electric field generation controller 3j is supplied with drive power from the reefer apparatus 3. The high-tension wire connection portion 3j15 is provided on the cabinet 3j1 and is connectable to the high-tension wire 3j14 connected to the electrode plates 7. Each of the power supply connection portion 3j13 and the high-tension wire connection portion 3j15 on the cabinet 3j1 allows easy connection and disconnection of the corresponding one of the power line 3j12 and the high-tension wire 3j14.

The electric field generation controller 3j includes the operation display device 3j8 that displays the display screen 3j81 (i.e., an operation screen). The cabinet 3j1 includes the upper hatch 3j3 and the lower hatch 3j4. The upper hatch 3j3 has the window 3j7 facing at least the display screen 3j81. The operation display device 3j8 may thus be protected by the upper hatch 3j3. The display screen 3j81 is visible through the window 3j7 with the upper hatch 3j3 closed. The upper hatch 3j3 is openable independently of the lower hatch 3j4, and the possibility of inadvertent opening of the lower housing portion 3j6 is minimized accordingly.

### Modifications of First Embodiment

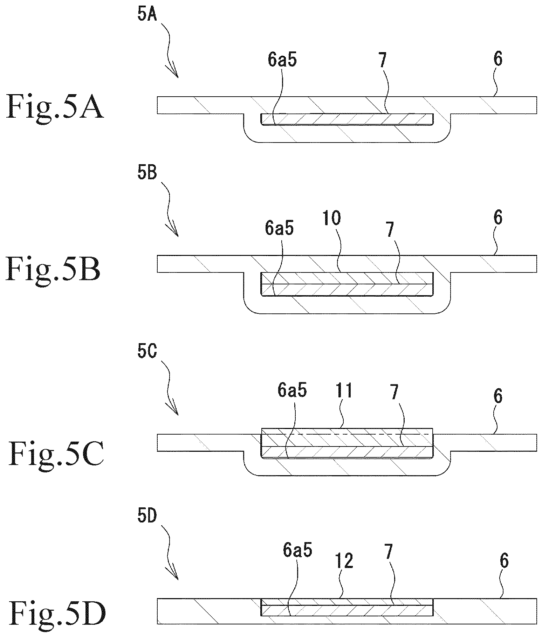

The electrode members 5 in the present embodiment each have the insulation cavity 6a6 provided on the electrode plate 7 in the electrode plate housing 6a5 of the electrode-housing member 6. An alternative to the electrode member 5 may be an electrode member 5A, which does not have the insulation cavity 6a6 as illustrated in Fig. 5A. The height of the electrode plate housing 6a5 of the electrode member 5A is about the same as the height of the electrode plate 7. A further reduction in the height of the electrode member 5A may be achieved. The electrode plate 7 and the electrode-housing member 6 of the electrode member 5A may be integrally molded by insert molding. The electrode plate housing 6a5 may have, on its faces facing the electrode plate 7, small projections to press and hold the electrode plate 7. Each of the small projections is one form of a press member of the present invention.

Referring to Fig. 5B, an electrode member 5B includes, in the electrode plate housing 6a5 of the electrode-housing member 6, the electrode plate 7 and a cushioning member 10, which overlies the electrode plate 7. The cushioning member 10 has electrical insulation properties and is in sheet form. The cushioning member 10 is one form of the press member of the present invention. As with the press member 8, the cushioning member 10 of the electrode member 5B has the function of pressing and holding the electrode plate 7. Specifically, with the given thickness of the cushioning member 10, the height of a multilayer body composed of the cushioning member 10 and the electrode plate 7 is greater than the interior height of the electrode plate housing 6a5. Thus, the electrode member 5B is thin in profile and can restrict the movement of the electrode plate 7.

Referring to Fig. 5C, an electrode member 5C includes the electrode plate 7 and an elastic member 11, which overlies the electrode plate 7. The elastic member 11 is a rubbery elastic body in sheet form and is elastically deformable in the thickness direction. The elastic member 11 is one form of the press member of the present invention. When the electrode member 5C is fixed to the ceiling portion 2a, the elastic member 11 is squashed. As with the press member 8, the elastic member 11 thus has the function of pressing and holding the electrode plate 7. The elastic member 11 is squashed when being fitted to the ceiling portion 2a; therefore, the height of the electrode plate housing 6a5 may be less than the sum of the height of the electrode plate 7 and the height of the elastic member 11 in the free state. The electrode-housing member 6 does not include the top face portion 6a1; therefore, the electrode plate housing 6a5 of the electrode-housing member 6 has a shape of a groove. The electrode plate 7 and the elastic member 11 are received in the electrode plate housing 6a5. Thus, the electrode member 5C in Fig. 5C is thinner in profile and can restrict the movement of the electrode plate 7.

Referring to Fig. 5D, an electrode member 5D has a shape of a flat plate. Specifically, the electrode plate housing 6a5 of the electrode-housing member 6 has a shape of a shallow groove. The electrode plate 7 and a cushioning member 12, which has electrical insulation properties and is in sheet form, are fitted in the electrode plate housing 6a5. With the given thickness, the cushioning member 12 does not protrude from a top end of the electrode plate housing 6a5 as illustrated in Fig. 5D. Alternatively, the cushioning member 12 may be thicker so as to protrude from the top end of the electrode plate housing 6a5. The electrode-housing member 6 does not include the top face portion 6a1. Thus, the electrode member 5D in Fig. 5D is much thinner in profile and can restrict the movement of the electrode plate 7.

The electrode members in 5A to 5D in Fig. 5 may be used as the electrode members 5 in other embodiments, which will be described later.

In the embodiment above, the electrode members 5 are fixed to the ceiling portion 2a, and the ceiling interior finishing panel 2a3 is a resin panel (i.e., an interior finishing panel made of resin). Alternatively, the electrode members 5 may be fixed to the side wall portions 2b, the front wall portion 2c, or the floor portion 2d. In this case, the interior finishing panel of each of the side wall portions 2b or the interior finishing panel of the floor portion 2d is a resin panel (i.e., an interior finishing panel made of resin). The interior finishing panel of the floor portion 2d may be a resin panel having T rails. Still alternatively, any two of the ceiling portion 2a, the side wall portions 2b, the front wall portion 2c, and the floor portion 2d may include resin panels (i.e., interior finishing panels made of resin) for fixation of the electrode members 5.

The whole of the ceiling interior finishing panel 2a3 of the ceiling portion 2a in the embodiment above is a resin panel. In some embodiments, the ceiling interior finishing panel 2a3 may be composed of a plurality of ceiling interior finishing panels 2a3 connected to each other.

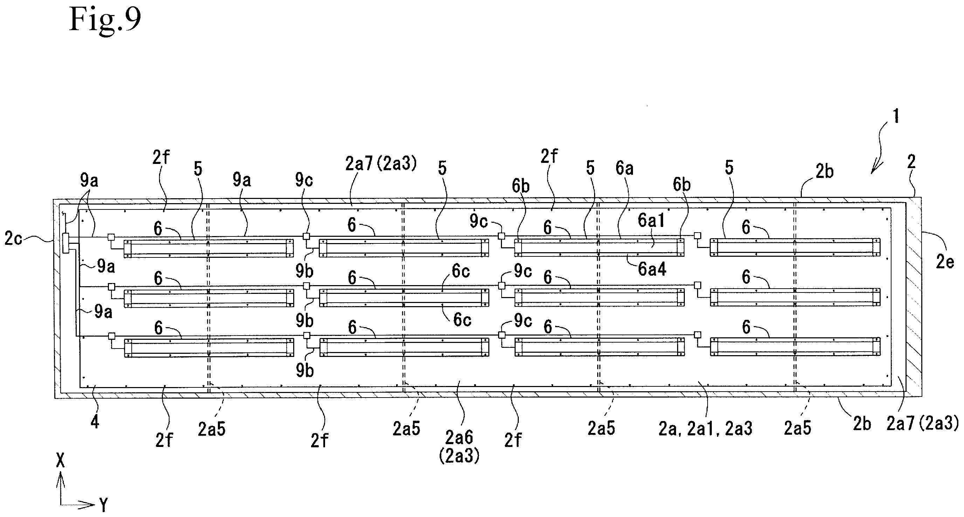

### Second Embodiment (Fig. 9)

Fig. 9 illustrates a ceiling interior finishing panel 2a3 of an electric field-generating container 1 according to a second embodiment. The ceiling interior finishing panel 2a3 in the second embodiment includes a resin panel portion 2a6 (i.e., a resin panel or an interior finishing panel made of resin) and a metallic frame plate 2a7 (i.e., a support member).

The resin panel portion 2a6 is a resin panel made of electrical insulating resin. The metallic frame plate 2a7 is a metallic plate having a shape of a polygonal frame. The metallic frame plate 2a7 may be a combination of metallic plates. The metallic frame plate 2a7 may be made of a metallic material such as stainless steel. The resin panel portion 2a6 is fastened to the metallic frame plate 2a7 with fasteners 2f (e.g., screws or rivets) in different places. The resin plate portion 2a6 is provided with reinforcing members 2a5, which are fastened thereto. The reinforcing members 2a5 are laid across the metallic frame plate 2a7. This enables the metallic frame plate 2a7 to hold the resin plate portion 2a6 and provides greater rigidity in the entirety of the ceiling interior finishing panel 2a3.

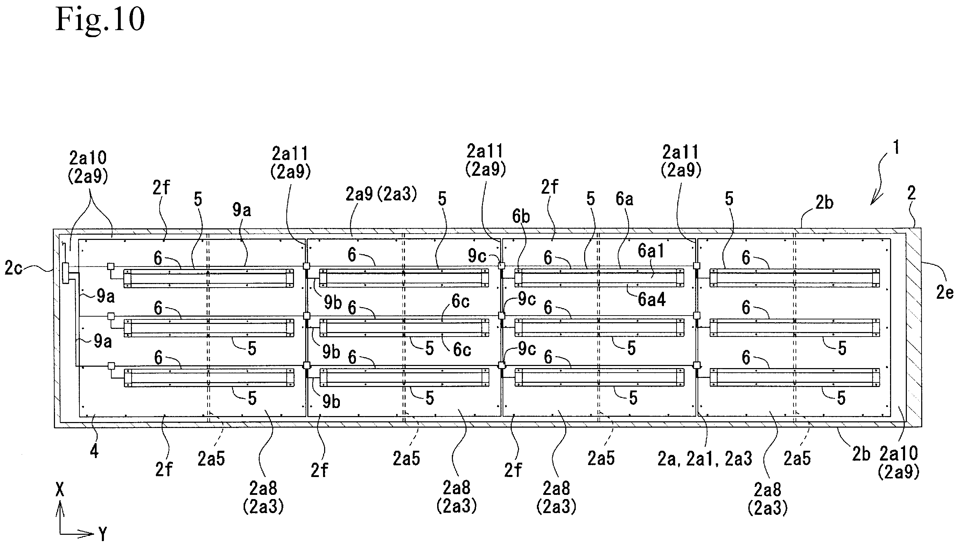

### Third Embodiment (Fig. 10)

Fig. 10 illustrates a ceiling interior finishing panel 2a3 of an electric field-generating container 1 according to a third embodiment. The ceiling interior finishing panel 2a3 in the third embodiment includes resin panel portions 2a8 (i.e., resin panels) and a metallic frame plate 2a9 (i.e., a support member).

The resin panel portions 2a8 are discrete panels arranged side by side in the longitudinal direction of the container casing 2. Referring to Fig. 10, four resin panel portions 2a8 are provided. The metallic frame plate 2a9 includes a frame portion 2a10 and bridge portions 2a11. The frame portion 2a10 has a shape of a polygonal frame, and the bridge portions 2a11 are laid across the frame portion 2a10. The metallic frame plate 2a9 may be a combination of metallic plates. The metallic frame plate 2a9 may be made of a metallic material such as stainless steel. The resin panel portions 2a8 are fastened to the metallic frame plate 2a9 with fasteners 2f (e.g., screws or rivets) in different places. The individual resin plate portions 2a8 are small in area and are held by the metallic frame plate 2a9, which provides greater rigidity in the entirety of the ceiling interior finishing panel 2a3 accordingly.

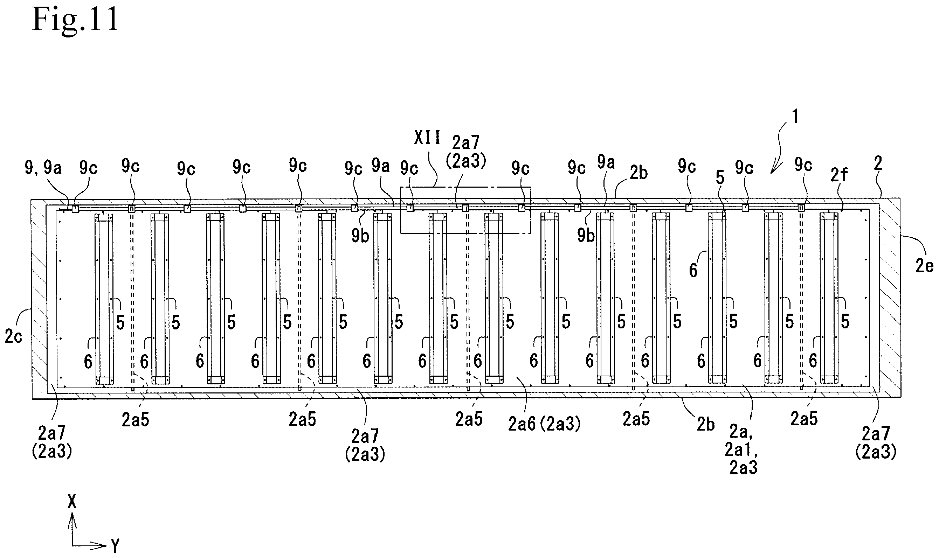

### Fourth Embodiment (Figs. 11 and 12)

In the first embodiment, the longitudinal direction of each electrode member 5 coincides with the longitudinal direction of the container casing 2 (i.e., the Y direction); that is, the electrode members 5 are arranged in the longitudinal direction. Alternatively, the longitudinal direction of each electrode member 5 may coincide with the width direction of the container casing 2 (i.e., the X direction), and the electrode members 5 may be arranged in parallel and spaced apart from each other in the longitudinal direction of the container casing 2 (i.e., in the Y direction); that is, the electrode members 5 may be arranged in the width direction. Fig. 11 illustrates an example of such an embodiment in which the electrode members 5 are arranged in the width direction. The arrangement of the electrode members 5 enables the conduction paths 9 (i.e., wiring) to be adjacent to one of the side wall portions 2b (on the right or left side) in the width direction of the container casing 2. This layout improves the interior design of the ceiling surface 2a1 having the conduction paths 9 routed thereon.

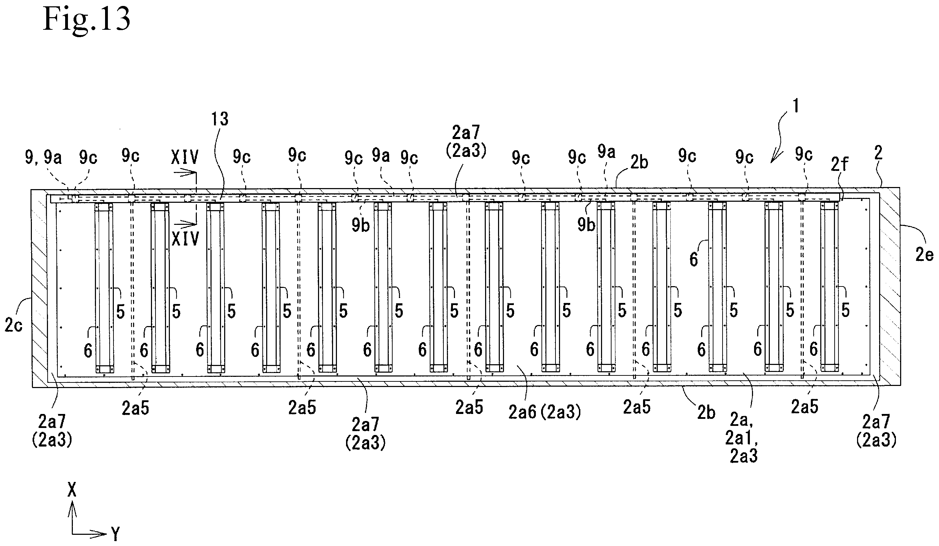

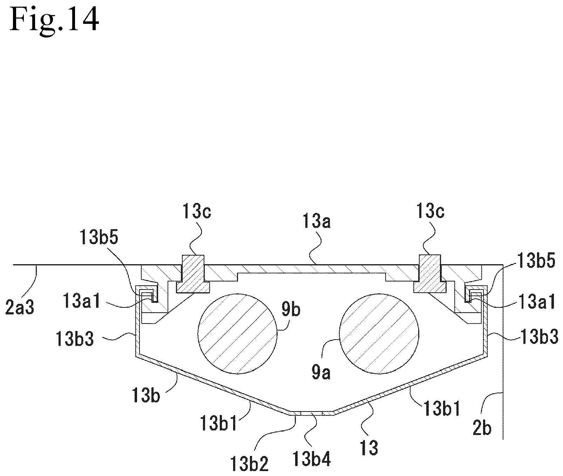

### Fifth Embodiment (Figs. 13 and 14)

In the embodiments above, the conduction paths 9 are exposed to view in the accommodation chamber 4. In some embodiments, meanwhile, the conduction paths 9 may be covered with a cover member that conceals them from view in the accommodation chamber 4. One of these embodiments is a fifth embodiment, which will be described below. When the conduction paths 9 are disposed on only one side (the right or left side) in the width direction of the container casing 2 as in the fourth embodiment, cover members 13 may be arranged in a straight line in the longitudinal direction of the container casing 2 (i.e., in the Y direction) so as to conceal the conduction paths 9 from view in the accommodation chamber 4. In the fifth embodiment, the cover members 13 are provided on the electric field-generating container 1 according to the fourth embodiment.

The cover members 13 are linked to each other and arranged in series. The cover members 13 are resin molded articles. As illustrated in Fig. 14, the cover members 13 each include a base 13a and a cover main body 13b. The base 13a is fastened to the ceiling interior finishing panel 2a3, and the cover main body 13b is attached to the base 13a. Each cover member 13 is fastened to the ceiling interior finishing panel 2a3 with base fasteners 13c (e.g., bolts).

The width of the base 13a is shorter than its length (i.e., the dimension shown in Fig. 14). The base 13a supports the corresponding cover main body 13b in two places in the longitudinal direction of the base 13a. The base 13a may have, for example, a length of 124 mm, a width of 30 mm, and a height of 20 mm. The base 13a includes catch receiving portions 13a1, which are groove-shaped.

The cover main body 13b is a resin molded article that is recessed (i.e., is v-shaped and protrudes downward). The cover main body 13b includes a pair of inclined face portions 13b1, a flat face portion 13b2 on lower ends of the inclined face portions 13b1, and upright portions 13b3 on upper ends of the inclined face portions 13b1. The inclined face portion 13b1 of the cover main body 13b causes water on the cover main body 13b to flow into the flat face portion 13b2, where the water is drained from holes 13b4, which will be described later. The cover main body 13b may have, for example, a length of 1,200 mm, a width of 130 mm, and a height of 45 mm.

The flat face portion 13b2 has the holes 13b4 aligned in the longitudinal direction of the cover main body 13b. The holes 13b4 are through-holes from which condensation on the inside of the cover member 13 may be drained. The holes 13b4 may be elongated holes each having a length of 10 mm and a width of 8 mm and may be discretely located away from each other with a center-to-center distance of 250 mm. The upright portions 13b3 are provided with hook portions 13b5, which are located at top ends of the upright portions 13b3 and are fitted into the catch receiving portion 13a1 of the base 13a. Each hook portion 13b5 is folded over to increase the stiffness of the upper end portion of the corresponding upright portion 13b3 and to be securely fitted into the corresponding catch receiving portion 13a1.

The cover members 13 protect the conduction paths 9 from external forces exerted thereon. This is particularly advantageous during loading of products for storage into the accommodation chamber 4 or unloading of stored products from the accommodation chamber 4. This layout improves the aesthetics of the interior design of the ceiling interior finishing panel 2a3 having the conduction paths 9 routed thereon.

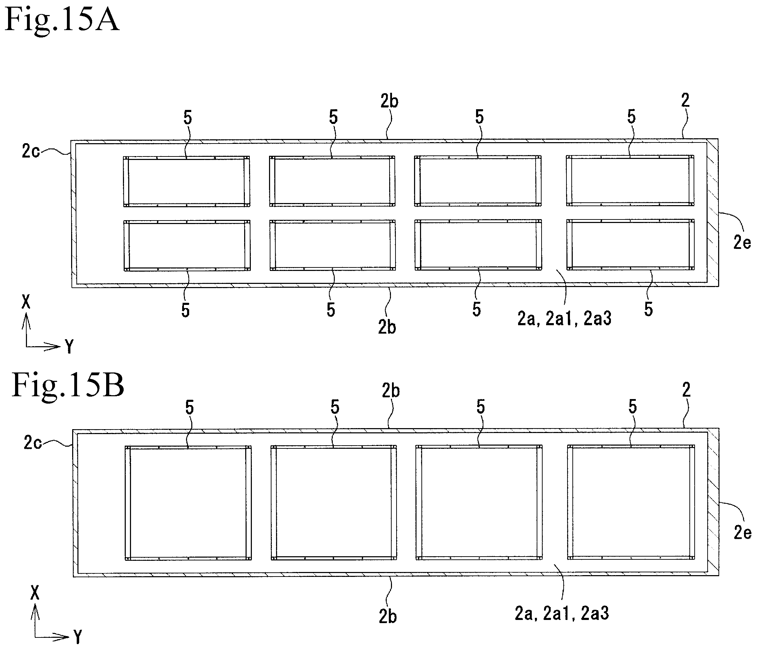

### Sixth Embodiment (Fig. 15A) and Seventh Embodiment (Fig. 15B)

The electrode plates 7 in the embodiments above each have a shape of a strip; however, the size and the shape of each electrode plate 7 is not limited to those of such a strip. It is required that the length of each electrode plate 7 in the width direction of the container casing 2 (i.e., in the X direction) be less than the length of the ceiling surface 2a1 in the width direction (i.e., in the X direction). It is also required that the length of each electrode plate 7 in the longitudinal direction of the container casing 2 (i.e., in the Y direction) be less than the length of the ceiling surface 2a1 in the longitudinal direction (i.e., in the Y direction). The electrode plates 7 may each have a shape of a panel as illustrated in Fig. 15A or 15B.

Fig. 15A illustrates a ceiling interior finishing panel 2a3 of an electric field-generating container 1 according to a sixth embodiment. A matrix of electrode members 5 with two rows and four columns is provided on a ceiling surface 2a1. The electrode members 5 each have a shape of a rectangular panel. Fig. 15B illustrates a ceiling interior finishing panel 2a3 of an electric field-generating container 1 according to a sixth embodiment. Four electrode members 5 are aligned in a row on a ceiling surface 2a1. The electrode members 5 each have a shape of a substantially square panel. The electrode members 5 in Figs. 15A and 15B include electrode plates 7 shaped and sized in conformance with the shape of the respective electrode members 5. A container casing 2 and the electrode members 5 are exclusively illustrated in Fig. 15 for the purpose of facilitating the understanding.

### Modifications of Embodiments

Configurations in the embodiments are applicable to other embodiments. The following modifications may be applied to the embodiments above.

The electric field generation controller 3j in the embodiments above is disposed in the lower section of the frame body 3c1 of the reefer apparatus 3. Alternatively, the electric field generation controller 3j may be disposed in another place within the reefer apparatus 3 (i.e., may be disposed in the upper section or in the middle section of the frame body 3c1).

The electric field generation controller 3j in the embodiments above includes the upper hatch 3j3 and the lower hatch 3j4. Alternatively, the electric field generation controller 3j may include three or more hatches. In some embodiments, the upper hatch 3j3 may be composed of a plurality of hatches.

The embodiment of the present invention has been described in detail so far. Those skilled in the art would readily understand that various modifications may be made within the scope that does not substantially depart from the configurations and effects of the present invention. Thus, such modifications are all included within the scope of the present invention.

For instance, a term in any part of the present specification or the accompanying drawings can be paraphrased into another term having a wider or similar meaning and written along with the relevant term at least once in the present specification or in the drawings. The configuration and the operation of the electric field-generating container 1 are not limited to those described in the embodiments of the present invention and may be modified for implementation in various ways.

### Reference Signs List

- 1: electric field-generating container
- 2: container casing
- 2a: ceiling portion
- 2a1: ceiling surface (indoor surface of accommodation chamber)
- 2a2: ceiling exterior finishing panel
- 2a3: ceiling interior finishing panel (resin panel)
- 2a6: resin panel portion (interior finishing panel made of resin, ceiling interior finishing panel)
- 2a7: metallic frame plate (ceiling interior finishing panel)
- 2a8: resin panel portion (interior finishing panel made of resin, ceiling interior finishing panel)
- 2a9: metallic frame plate (ceiling interior finishing panel)
- 3: reefer apparatus
- 3A: cooling unit (cooling apparatus)
- 3B: electric field generation control unit
- 3j: electric field generation controller
- 3j1: cabinet
- 4: accommodation chamber
- 5: electrode member
- 5A to 5E: electrode member
- 6: electrode-housing member
- 7: electrode plate
- 13: cover member

## Claims

1. An electric field-generating container, comprising a container casing, a resin panel, and an electrode plate, wherein
the container casing includes an accommodation chamber that accommodates a stored product,
the resin panel has electrical insulation properties and is provided as the whole or part of an indoor surface of the accommodation chamber, and
the electrode plate is adjacent to the resin panel and is capable of forming an electric field in the accommodation chamber.

2. The electric field-generating container according to claim 1, wherein the resin panel is provided as the whole or part of a ceiling surface of the accommodation chamber.

3. The electric field-generating container according to claim 2, further comprising a support member that supports the resin panel.

4. The electric field-generating container according to any one of claims 1 to 3, further comprising a holding member having electrical insulation properties and including an electrode plate housing that has a flat shape to accommodate the electrode plate.

5. The electric field-generating container according to claim 4, wherein the holding member is fixed to the resin panel.

6. The electric field-generating container according to claim 4 or 5, further comprising a press member that presses the electrode plate against an inner face of the electrode plate housing to hold the electrode plate.

7. The electric field-generating container according to any one of claims 1 to 6, further comprising a cover member that covers wiring connected to the electrode plate.

8. The electric field-generating container according to any one of claims 1 to 7, further comprising a reefer apparatus capable of adjusting indoor temperature of the accommodation chamber, wherein
the reefer apparatus includes an electric field generation controller that controls energization of the electrode plate.

9. The electric field-generating container according to claim 8, wherein
the electric field generation controller includes a cabinet, a power supply connection portion, and a high-tension wire connection portion,
the power supply connection portion is provided on the cabinet and is connectable to a power line through which the electric field generation controller is supplied with drive power from the reefer apparatus, and
the high-tension wire connection portion is provided on the cabinet and is connectable to a high-tension wire connected to the electrode plate.

10. The electric field-generating container according to claim 8 or 9, wherein
the electric field generation controller includes an operation display device that displays an operation screen, and
the cabinet includes a plurality of hatches, one of the plurality of hatches being a first hatch having a window facing at least the operation screen.
